# EUROPEAN PATENT APPLICATION

(11) **EP 3 200 415 A1**
(43) Date of publication of application: **02.08.2017**
(21) Application number: 14905138.5
(22) Date of filing: 30.10.2014
(51) Int. Cl.: H04L 29/06

(54) **TERMINAL, SERVER AND USER IDENTIFICATION SYSTEM AND METHOD**

(71) Applicant: Huawei Technologies Co., Ltd., Longgang District Shenzhen, Guangdong 518129 (CN)
(72) Inventor: OUYANG, Fan, Shenzhen Guangdong 518129 (CN); LI, Jing, Shenzhen Guangdong 518129 (CN)
(74) Representative: Gill Jennings & Every LLP
(86) International application number: PCT/CN2014/089883
(87) International publication number: WO 2016/065572

(57) **Abstract**

The present invention discloses a terminal applied to a digital trunked communications system, and the terminal includes: an access module, configured to access a wireless communications network; and a sending module, configured to send a request message to a server, so that the server identifies the terminal, where the request message carries attribute information of the terminal. Embodiments of the present invention further provide a server, and a user identification system and method, to resolve a prior-art problem that the server can remotely control the terminal only after the server allocates a service account and a password to the terminal and the terminal logs in to the server according to the allocated service account and the password. Therefore, an implementation manner is simple.

## Description

### TECHNICAL FIELD

The present invention relates to the communications field, and specifically, to a terminal, a server, and a user identification system and method.

### BACKGROUND

A digital trunked communications system is a new type of mobile communications system that emerges at the end of the 20th century. In addition to a personal mobile communications service that can be provided by using a public mobile communications network, the digital trunked communications system can implement any type of communication between a person and a group, can be controlled and programmed independently, and is an intelligent communications network integrated with a walkie-talkie, a wireless communications system such as Global System for Mobile Communications (Global System for Mobile communications, GSM) or Code Division Multiple Access (Code Division Multiple Access, CDMA), and image transmission. The digital trunked communications system not only has all functions of personal communications, but also can control and implement any type of communication between a person and a group. With a high degree of confidentiality and abundant functions, real intelligent communications are fully implemented.

Currently, in the digital trunked communications system, a terminal needs to complete registration first, that is, a server allocates a service account and a password to the terminal, and the terminal logs in to the server according to the service account and the password, so that the server can remotely control the terminal. The remote control means that the server controls the terminal in a manner of remote activation, remote deactivation, remote stun, or the like.

It can be learned that in the prior art, a server can remotely control a terminal only after the server allocates a service account and a password to the terminal and the terminal logs in to the server according to the allocated service account and the password. Moreover, the server can identify the terminal only by using the service account, and there is only one identification manner.

### SUMMARY

Embodiments of the present invention provide a terminal, a server, and a user identification system and method, to resolve a prior-art problem that the server can remotely control the terminal only after the terminal logs in to the server according to a service account and a password allocated by the server.

A first aspect of the embodiments of the present invention provides a terminal applied to a digital trunked communications system, where the terminal includes:
an access module, configured to access a wireless communications network; and
a sending module, configured to send a request message to a server after the access module accesses the wireless communications network, so that the server identifies whether the terminal meets an authorization condition, where the request message carries attribute information of the terminal.

With reference to the first aspect, in a first possible implementation manner, that the request message carries attribute information of the terminal includes:
the request message carries at least one of hardware attribute information or software attribute information of the terminal; where
the hardware attribute information includes at least one of an international mobile subscriber identity IMSI, an international mobile equipment identity IMEI, or a hardware serial number; and the software attribute information includes at least one of software identification information or software version information.

With reference to the first aspect or the first possible implementation manner of the first aspect, in a second possible implementation manner, the terminal further includes:
an obtaining module, configured to obtain a feedback message sent by the server, where the feedback message includes a result of identifying the terminal by the server.

A second aspect of the embodiments of the present invention provides a server, where the server includes:
an obtaining module, configured to obtain a request message sent by a terminal, where the request message carries attribute information of the terminal;
an identification module, configured to identify, according to the attribute information of the terminal, whether the terminal meets an authorization condition; and
a remote control module, configured to remotely control the terminal when the identification module identifies that the terminal meets the authorization condition.

With reference to the second aspect, in a first possible implementation manner, that the request message carries attribute information of the terminal includes:
the request message carries at least one of hardware attribute information or software attribute information of the terminal; where
the hardware attribute information includes at least one of an IMSI, an IMEI, or a hardware serial number; and the software attribute information includes at least one of software identification information or software version information.

With reference to the second aspect or the first possible implementation manner of the second aspect, in a second possible implementation manner, that the identification module is configured to identify, according to the attribute information of the terminal, whether the terminal meets the authorization condition includes:
matching the received attribute information of the terminal with attribute information stored on the server, where the terminal meets the authorization condition when the matching is successful, or the terminal does not meet the authorization condition when the matching is unsuccessful, and that the terminal meets the authorization condition means that the terminal meets a condition for receiving remote control implemented by the server.

With reference to the second aspect or the first possible implementation manner of the second aspect, in a third possible implementation manner, the server further includes:
a sending module, configured to send a feedback message to the terminal, where the feedback message includes a result of identifying the terminal by the server.

A third aspect of the embodiments of the present invention provides a user identification system, where the system includes a terminal and a server, the terminal is the terminal described in the first aspect, and the server is the server described in the second aspect.

A fourth aspect of the embodiments of the present invention provides a user identification method, including:
accessing, by a terminal, a wireless communications network; and
sending, by the terminal, a request message to a server, so that the server identifies the terminal, where the request message carries attribute information of the terminal.

With reference to the fourth aspect, in a first possible implementation manner, that the request message carries attribute information of the terminal includes:
the request information carries at least one of hardware attribute information or software attribute information of the terminal; where
the hardware attribute information includes at least one of an IMSI, an IMEI, or a hardware serial number; and the software attribute information includes at least one of software identification information or software version information.

With reference to the fourth aspect, in a second possible implementation manner, after the sending, by the terminal, a request message to a server, so that the server identifies the terminal, the method further includes:
obtaining a feedback message sent by the server, where the feedback message includes a result of identifying the terminal by the server.

A fifth aspect of the embodiments of the present invention provides a user identification method, including:
obtaining, by a server, a request message sent by a terminal, where the request message carries attribute information of the terminal;
identifying, by the server according to the attribute information of the terminal, whether the terminal meets an authorization condition; and
remotely controlling, by the server, the terminal when the terminal meets the authorization condition.

With reference to the fifth aspect, in a first possible implementation manner, that the request message carries attribute information of the terminal includes:
the request information carries at least one of hardware attribute information or software attribute information of the terminal; where
the hardware attribute information includes at least one of an IMSI, an IMEI, or a hardware serial number; and the software attribute information includes at least one of software identification information or software version information.

With reference to the fifth aspect or the first possible implementation manner of the fifth aspect, in a second possible implementation manner, the identifying, by the server according to the attribute information of the terminal, whether the terminal meets an authorization condition includes:
matching the received attribute information of the terminal with attribute information stored on the server, where the terminal meets the authorization condition when the matching is successful, or the terminal does not meet the authorization condition when the matching is unsuccessful, and that the terminal meets the authorization condition means that the terminal meets a condition for receiving remote control implemented by the server.

With reference to the fifth aspect or the second possible implementation manner of the fifth aspect, in a third possible implementation manner, after the identifying, by the server according to the attribute information of the terminal, whether the terminal meets an authorization condition, the method further includes:
sending a feedback message to the terminal, where the feedback message includes a result of identifying the terminal by the server.

By using the foregoing technical solutions, after accessing a wireless communications network, a terminal sends a request message to a server. Because the request message carries attribute information of the terminal, the server can remotely control the terminal by identifying the attribute information only. Therefore, the terminal does not need to obtain a service account and a password from the server, and an implementation manner is simple.

### BRIEF DESCRIPTION OF DRAWINGS

FIG. 1 is a schematic diagram of an embodiment of a terminal in the embodiments of the present invention;
FIG. 2 is a schematic diagram of another embodiment of a terminal in the embodiments of the present invention;
FIG. 3 is a schematic diagram of another embodiment of a server in the embodiments of the present invention;
FIG. 4 is a schematic diagram of another embodiment of a server in the embodiments of the present invention;
FIG. 5 is a schematic structural diagram of a terminal and a server in the embodiments of the present invention;
FIG. 6 is a schematic diagram of an embodiment of a user identification method in the embodiments of the present invention;
FIG. 7 is a schematic diagram of another embodiment of a user identification method in the embodiments of the present invention;
FIG. 8 is a schematic diagram of another embodiment of a user identification method in the embodiments of the present invention; and
FIG. 9 is a schematic diagram of another embodiment of a user identification method in the embodiments of the present invention.

### DESCRIPTION OF EMBODIMENTS

Embodiments of the present invention provide a terminal, a server, and a user identification system and method, to resolve a prior-art problem that the server can remotely control the terminal only after the server allocates a service account and a password to the terminal and the terminal logs in to the server according to the allocated service account and the password.

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by persons skilled in the art based on the embodiments of the present invention without creative efforts shall fall within the protection scope of the present invention.

For ease of understanding the embodiments of the present invention, a system to which the embodiments of the present invention is applied is first described herein. The technical solutions in the embodiments of the present invention are applied to a digital trunked communications system. The system is an intelligent communications network integrated with a walkie-talkie, GSM, CDMA, and image transmission, and may include a server and a terminal. There may be one or more servers. For example, there may be two servers: a primary server and a backup server. There may be multiple terminals. The terminal may be a mobile terminal, such as a mobile phone or a tablet computer, or may be a fixed terminal device, such as a personal computer. Specific implementation of the terminal is not limited in the embodiments of the present invention. The server in the digital trunked communications system may allocate a service account and a password to the terminal, and then the terminal logs in to the server according to the allocated service account and the password, so that the server can remotely control the terminal. Moreover, the server can identify the terminal only by using the service account, and there is only one identification manner.

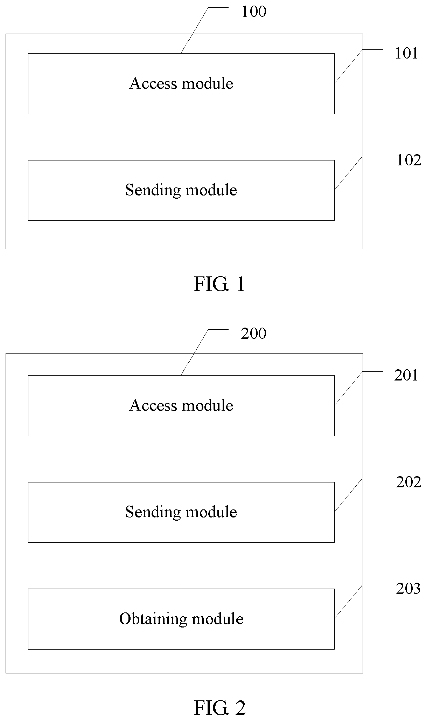

Referring to FIG. 1, FIG. 1 shows an embodiment of a terminal 100 in the embodiments of the present invention. The terminal 100 may include an access module 101 and a sending module 102.

The access module 101 is configured to access a wireless communications network.

In this embodiment of the present invention, after switched on, the terminal accesses the wireless communications network, such as GSM, CDMA, a Wideband Code Division Multiple Access (WCDMA, Wideband Code Division Multiple Access) system, a Long Term Evolution (LTE, Long Term Evolution) system, or a subsequent evolution system. Generally, the terminal automatically searches for and accesses a network after switched on.

The sending module 102 is configured to send a request message to a server after the access module 101 accesses the wireless communications network, so that the server identifies the terminal, where the request message carries attribute information of the terminal.

Different from the prior art, the request message sent by the terminal in this embodiment of the present invention carries the attribute information of the terminal. Therefore, the terminal does not need to obtain a service account and a password from the server. The server can remotely control the terminal after the server identifies the attribute information and determines that the terminal is an authorized terminal.

It should be noted that the remote control may include three manners, that is, remote activation, remote deactivation, and remote stun. The manner of remote activation is specifically controlling the terminal to enable communication. The manner of remote deactivation is specifically controlling the terminal to disable communication and delete related data of the terminal. The manner of remote stun is specifically controlling the terminal to disable communication only and not to delete related data of the terminal. In addition, the remote control further includes another manner. This is not specifically limited herein.

In this embodiment of the present invention, after accessing a wireless communications network, a terminal sends a request message to a server. Because the request message carries attribute information of the terminal, the server can remotely control the terminal by identifying the attribute information only. Therefore, an implementation manner is simple.

Referring to FIG. 2, FIG. 2 shows another embodiment of a terminal 200 in the embodiments of the present invention. The terminal 200 includes an access module 201, a sending module 202, and an obtaining module 203.

The access module 201 is configured to access a wireless communications network.

In this embodiment of the present invention, after switched on, the terminal accesses the wireless communications network. For example, after a mobile phone user switches on a mobile phone, the mobile phone automatically searches for a mobile network, and accesses the mobile communications network.

The sending module 202 is configured to send a request message to a server after the access module 201 accesses the wireless communications network, so that the server identifies the terminal, where the request message carries attribute information of the terminal.

Different from the prior art, the request message sent by the terminal in this embodiment of the present invention carries the attribute information of the terminal. Therefore, the terminal does not need to obtain a service account and a password from the server. The server can remotely control the terminal after the server identifies the attribute information.

Optionally, that the request message carries attribute information of the terminal includes:
the request message carries at least one of hardware attribute information or software attribute information of the terminal; where
the hardware attribute information includes at least one of an international mobile subscriber identity IMSI, an international mobile equipment identity IMEI, or a hardware serial number; and the software attribute information includes at least one of software identification information or software version information.

It should be noted that the IMSI may be an IMSI in a subscriber identity module (Subscriber Identity Module, SIM) or in a universal subscriber identity module (Universal Subscriber Identity Module, USIM). This is not specifically limited herein.

It should be noted that the hardware attribute information may further include other information in addition to the IMSI, the IMEI, and the hardware serial number. This is not specifically limited herein.

It should be noted that the software attribute information further includes other information in addition to the software identification information and the software version information. This is not specifically limited herein.

In this embodiment of the present invention, the attribute information of the terminal represents a specific characteristic of the terminal. The server identifies a specifically specified terminal by using the attribute information, and can remotely control the specified terminal. Therefore, maintenance efficiency is improved.

The obtaining module 203 is configured to obtain, after the sending module 202 sends the request message to the server, so that the server identifies the terminal, a feedback message sent by the server, where the feedback message includes a result of identifying the terminal by the server.

In this embodiment of the present invention, the terminal may further obtain the feedback message from the server, that is, the terminal may understand whether authentication and verification from the server are passed.

In this embodiment of the present invention, after accessing a wireless communications network, a terminal sends a request message to a server, and the request message carries attribute information of the terminal. The attribute information may be hardware information, or may be software information, and the attribute information represents a specific characteristic of the terminal. Therefore, the server can remotely control a specified terminal according to the attribute information, and maintenance efficiency is improved. In addition, the server can remotely control the terminal by identifying any type of the attribute information only. Therefore, there are various identification manners, and an implementation manner is simple.

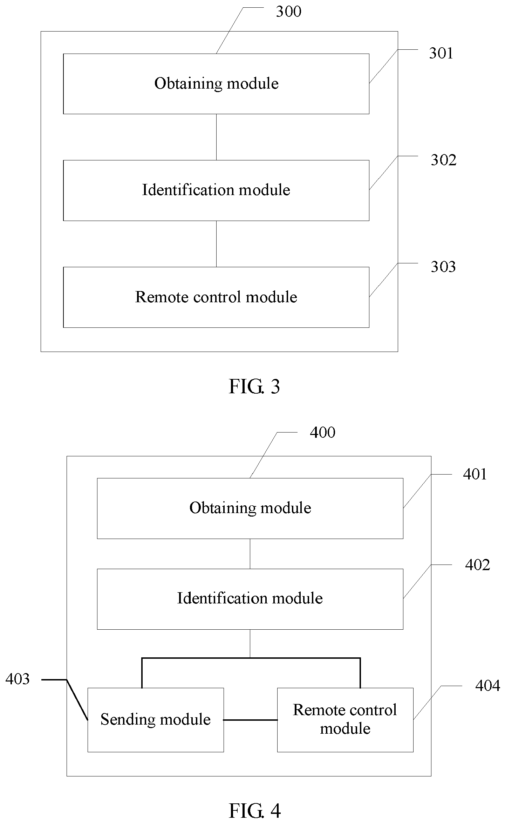

Referring to FIG. 3, FIG. 3 shows an embodiment of a server 300 in the embodiments of the present invention. The server 300 includes an obtaining module 301, an identification module 302, and a remote control module 303.

The obtaining module 301 is configured to obtain a request message sent by a terminal, where the request message carries attribute information of the terminal.

Different from the prior art, the request message that is sent by the terminal and that is obtained by the server in this embodiment of the present invention carries the attribute information of the terminal. A service account and a password do not need to be obtained from the server. The server can remotely control the terminal after the server identifies the attribute information and determines that the terminal is an authorized terminal.

The identification module 302 is configured to identify, according to the attribute information of the terminal after the obtaining module 301 obtains the attribute information of the terminal, whether the terminal meets an authorization condition.

The remote control module 303 is configured to remotely control the terminal when the identification module 302 identifies that the terminal meets the authorization condition.

In this embodiment of the present invention, whether the authorization condition is met specifically means whether the server can identify the attribute information sent by the terminal. If the server can identify the attribute information sent by the terminal, the terminal meets the authorization condition. If the server cannot identify the attribute information sent by the terminal, the terminal does not meet the authorization condition, and cannot be remotely controlled either.

In this embodiment of the present invention, a server obtains a request message sent by a terminal, the request message carries attribute information of the terminal, and the attribute information represents a specific characteristic of the terminal. Therefore, the terminal does not need to obtain a service account and a password. The server only needs to identify, according to the attribute information of the terminal, whether the terminal meets an authorization condition. If the terminal meets the authorization condition, the server can remotely control the terminal, and an implementation manner is simple.

Referring to FIG. 4, FIG. 4 shows another embodiment of a server 400 in the embodiments of the present invention. The server 400 includes an obtaining module 401, an identification module 402, a sending module 403, and a remote control module 404.

The obtaining module 401 is configured to obtain a request message sent by a terminal, where the request message carries attribute information of the terminal.

Different from the prior art, the request message that is sent by the terminal and that is obtained by the server in this embodiment of the present invention carries the attribute information of the terminal. A service account and a password do not need to be obtained from the server. The server can remotely control the terminal after the server identifies the attribute information and determines that the terminal is an authorized terminal.

Optionally, that the request message carries attribute information of the terminal includes:
the request message carries at least one of hardware attribute information or software attribute information of the terminal; where
the hardware attribute information includes at least one of an IMSI, an IMEI, or a hardware serial number; and the software attribute information includes at least one of software identification information or software version information.

It should be noted that the IMSI may be an IMSI in a SIM or in a USIM. This is not specifically limited herein.

It should be noted that the hardware attribute information may further include other information in addition to the IMSI, the IMEI, and the hardware serial number. This is not specifically limited herein.

It should be noted that the software attribute information further includes other information in addition to the software identification information and the software version information. This is not specifically limited herein.

In this embodiment of the present invention, the attribute information represents a specific characteristic of the terminal. The server identifies a specifically specified terminal by using the attribute information, and can remotely control the specified terminal. Therefore, maintenance efficiency is improved.

The identification module 402 is configured to identify, according to the attribute information of the terminal after the obtaining module 401 obtains the attribute information of the terminal, whether the terminal meets an authorization condition.

In this embodiment of the present invention, whether the authorization condition is met specifically means whether the server can identify the attribute information sent by the terminal. If the server can identify the attribute information sent by the terminal, the terminal meets the authorization condition. If the server cannot identify the attribute information sent by the terminal, the terminal does not meet the authorization condition, and cannot be remotely controlled either.

Optionally, that the identification module 402 is configured to identify, according to the attribute information of the terminal, whether the terminal meets an authorization condition includes:
matching the received attribute information of the terminal with attribute information stored on the server, where the terminal meets the authorization condition when the matching is successful, or the terminal does not meet the authorization condition when the matching is unsuccessful, and that the terminal meets the authorization condition means that the terminal meets a condition for receiving remote control implemented by the server.

The sending module 403 is configured to send a feedback message to the terminal after the identification module 402 identifies whether the terminal meets the authorization module, where the feedback message includes a result of identifying the terminal by the server.

The remote control module 404 is configured to remotely control the terminal when the identification module 402 identifies that the terminal meets the authorization condition.

In this embodiment of the present invention, the server sends the feedback message to the terminal, that is, whether the terminal passes authentication and verification.

In this embodiment of the present invention, a server obtains a request message sent by a terminal, the request message carries attribute information of the terminal, and the attribute information represents a specific characteristic of the terminal. Therefore, the server does not need to obtain a service account and a password. The server only needs to identify whether the terminal meets an authorization condition. The attribute information may be hardware attribute information, or may be software attribute information. The server can remotely control the terminal by identifying any type of the attribute information only. Therefore, there are various identification manners, and an implementation manner is simple.

An embodiment of the present invention further provides a user identification system, including:
a terminal and a server.

For descriptions of the server and the terminal, refer to the embodiments in FIG. 1 to FIG. 4. Details are not described herein again.

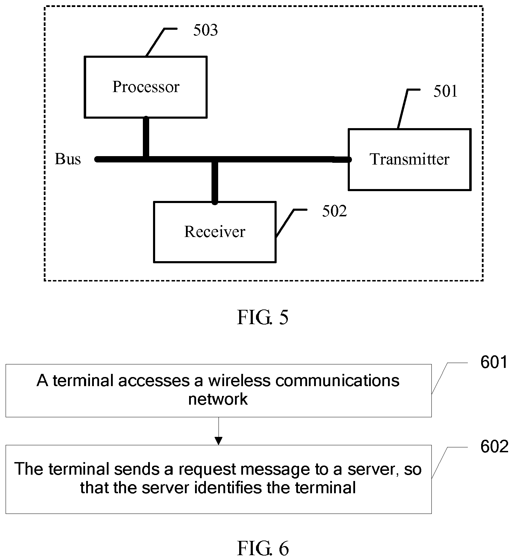

In the embodiments shown in FIG. 1 to FIG. 4, specific structures of the terminal and the server are described from a perspective of a function module. The following describes the specific structures of the terminal and the server from a hardware perspective with reference to an embodiment in FIG. 5.

The terminal and the server involved in this embodiment of the present invention may combine two or more components, or may have different component configurations or settings. Each component may be implemented in hardware that includes one or more signal processing and/or application-specific integrated circuits, in software, or in a combination of hardware and software.

A transmitter 501 is configured to perform the following operation:
sending a request message to the server, so that the server identifies the terminal, where the request message carries attribute information of the terminal.

A receiver 502 is configured to perform the following operation:
obtaining the request message sent by the terminal.

A processor 503 is configured to perform the following operations:
identifying, according to the attribute information of the terminal, whether the terminal meets an authorization condition; and
remotely controlling, by the server, the terminal when the terminal meets the authorization condition.

To better implement the foregoing related apparatuses in the embodiments of the present invention, the following further provides a related method used to cooperate with the foregoing apparatuses.

Referring to FIG. 6, FIG. 6 shows an embodiment of a user identification method in the embodiments of the present invention. The method includes the following steps.
601. A terminal accesses a wireless communications network.
   In this embodiment of the present invention, after switched on, the terminal accesses the wireless communications network, such as GSM, CDMA, a WCDMA system, an LTE system, or a subsequent evolution system. Generally, for example, after a user switches on a mobile phone, the mobile phone automatically searches for and accesses the wireless communications network.
602. The terminal sends a request message to a server, so that the server identifies the terminal.

Different from the prior art, the request message sent by the terminal in this embodiment of the present invention carries attribute information of the terminal. A service account and a password do not need to be obtained from the server. The server can remotely control the terminal after the server identifies the attribute information and determines that the terminal is an authorized terminal.

It should be noted that in this embodiment of the present invention, the remote control may include three manners, that is, remote activation, remote deactivation, and remote stun. The remote activation is specifically controlling the terminal to enable communication. The remote deactivation is specifically controlling the terminal to disable communication and delete related data of the terminal. The remote stun is specifically controlling the terminal to disable communication only and not to delete related data of the terminal. In addition, the remote control may further include another manner. This is not specifically limited herein.

In this embodiment of the present invention, after accessing a wireless communications network, a terminal sends a request message to a server. Because the request message carries attribute information of the terminal, the server can remotely control the terminal by identifying the attribute information only. Therefore, an implementation manner is simple.

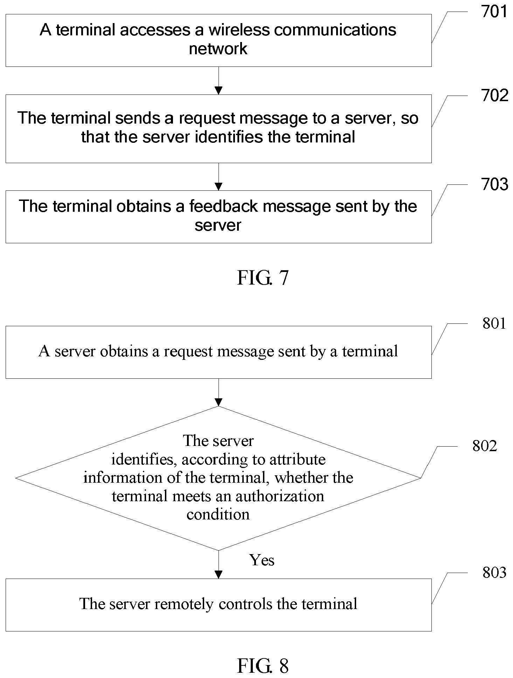

Referring to FIG. 7, FIG. 7 shows another embodiment of a user identification method in the embodiments of the present invention. The method includes the following steps.
701. A terminal accesses a wireless communications network.
   In this embodiment of the present invention, after switched on, the terminal accesses the wireless communications network. Generally, after a user switches on a mobile phone, the mobile phone automatically searches for and accesses the wireless communications network.
702. The terminal sends a request message to a server, so that the server identifies the terminal.
   Different from the prior art, the request message sent by the terminal in this embodiment of the present invention carries attribute information of the terminal. A service account and a password do not need to be obtained from the server. The server can remotely control the terminal after the server identifies the attribute information and determines that the terminal is an authorized terminal.
   Optionally, that the request message carries attribute information of the terminal includes:
   the request message carries at least one of hardware attribute information or software attribute information of the terminal; where
   the hardware attribute information includes at least one of an IMSI, an IMEI, or a hardware serial number; and the software attribute information includes at least one of software identification information or software version information.

   It should be noted that the IMSI may be an IMSI in a SIM or in a USIM. This is not specifically limited herein.
   It should be noted that the hardware attribute information may further include other information in addition to the IMSI, the IMEI, and the hardware serial number. This is not specifically limited herein.
   It should be noted that the software attribute information further includes other information in addition to the software identification information and the software version information. This is not specifically limited herein.
703. The terminal obtains a feedback message sent by the server.

In this embodiment of the present invention, the terminal further obtains the feedback message from the server. The feedback message includes a result of identifying the terminal by the server, that is, whether the terminal passes authentication and verification.

In this embodiment of the present invention, after accessing a wireless communications network, a terminal sends a request message to a server, and the request message carries attribute information of the terminal. The attribute information may be hardware information, or may be software information, and the attribute information represents a specific characteristic of the terminal. Therefore, the server can remotely control a specified terminal according to the attribute information, and maintenance efficiency is improved. In addition, the server can remotely control the terminal by identifying any type of the attribute information only. Therefore, there are various identification manners, and an implementation manner is simple.

Referring to FIG. 8, FIG. 8 shows another embodiment of a user identification method in the embodiments of the present invention. The method includes the following steps.
801. A server obtains a request message sent by a terminal.
   Different from the prior art, the request message that is sent by the terminal and that is obtained by the server in this embodiment of the present invention carries attribute information of the terminal. An account and a password do not need to be obtained from the server. The server can remotely control the terminal after the server identifies the attribute information and determines that the terminal is an authorized terminal.
802. The server identifies, according to attribute information of the terminal, whether the terminal meets an authorization condition; if the terminal meets the authorization condition, perform step 803.
803. The server remotely controls the terminal when the terminal meets the authorization condition.

In this embodiment of the present invention, whether the authorization condition is met specifically means whether the server can identify the attribute information sent by the terminal. If the server can identify the attribute information sent by the terminal, the terminal meets the authorization condition. If the server cannot identify the attribute information sent by the terminal, the terminal does not meet the authorization condition, and cannot be remotely controlled either.

In this embodiment of the present invention, a server obtains a request message sent by a terminal, the request message carries attribute information of the terminal, and the attribute information represents a specific characteristic of the terminal. Therefore, the server does not need to obtain a service account and a password. The server only needs to identify whether the terminal meets an authorization condition. If the terminal meets the authorization condition, the server can remotely control the terminal, and an implementation manner is simple.

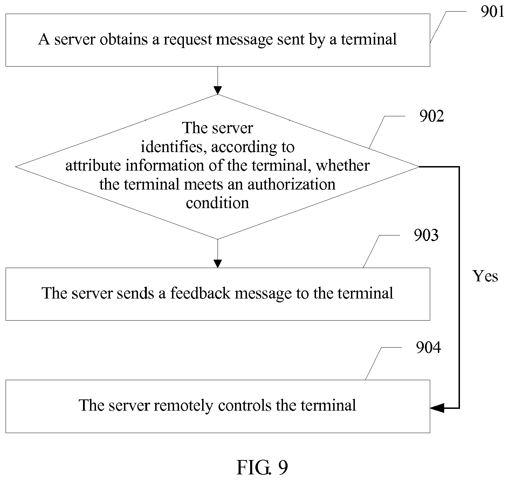

Referring to FIG. 9, FIG. 9 shows another embodiment of a user identification method in the embodiments of the present invention. The method includes the following steps.
901. A server obtains a request message sent by a terminal.
   Different from the prior art, the request message that is of the terminal and that is obtained by the server in the present invention carries attribute information of the terminal. Therefore, the terminal does not need to obtain a service account and a password from the server. The server can remotely control the terminal after the server identifies the attribute information and determines that the terminal is an authorized terminal.
   Optionally, that the request message carries attribute information of the terminal includes:
   the request message carries at least one of hardware attribute information or software attribute information of the terminal; where
   the hardware attribute information includes at least one of an IMSI, an IMEI, or a hardware serial number; and the software attribute information includes at least one of software identification information or software version information.

   It should be noted that the IMSI may be an IMSI in a SIM or in a USIM. This is not specifically limited herein.
   It should be noted that the hardware attribute information may further include other information in addition to the IMSI, the IMEI, and the hardware serial number. This is not specifically limited herein.
   It should be noted that the software attribute information further includes other information in addition to the software identification information and the software version information. This is not specifically limited herein.
902. The server identifies, according to attribute information of the terminal, whether the terminal meets an authorization condition; if the terminal meets the authorization condition, perform step 904.
   In this embodiment of the present invention, whether the authorization condition is met specifically means whether the server can identify the attribute information sent by the terminal. If the server can identify the attribute information sent by the terminal, the terminal meets the authorization condition. If the server cannot identify the attribute information sent by the terminal, the terminal does not meet the authorization condition, and cannot be remotely controlled either.
   Optionally, that the server identifies, according to attribute information of the terminal, whether the terminal meets an authorization condition includes:
   matching the received attribute information of the terminal with attribute information stored on the server, where the terminal meets the authorization condition when the matching is successful, or the terminal does not meet the authorization condition when the matching is unsuccessful, and that the terminal meets the authorization condition means that the terminal meets a condition for receiving remote control implemented by the server.
903. The server sends a feedback message to the terminal.
904. The server remotely controls the terminal when the terminal meets the authorization condition.

In this embodiment of the present invention, the server sends the feedback message to the terminal. The feedback message includes a result of identifying the terminal by the server, that is, the terminal may understand whether authentication and verification from the server are passed.

In this embodiment of the present invention, a server obtains a request message sent by a terminal, the request message carries attribute information of the terminal, and the attribute information represents a specific characteristic of the terminal. Therefore, the server does not need to obtain a service account and a password. The server only needs to identify whether the terminal meets an authorization condition. The attribute information may be hardware attribute information, or may be software attribute information. The server can remotely control the terminal by identifying any type of the attribute information only. Therefore, there are various identification manners, and an implementation manner is simple.

In the foregoing embodiments, the description of each embodiment has respective focuses. For a part that is not described in detail in an embodiment, reference may be made to related descriptions in other embodiments.

It may be clearly understood by persons skilled in the art that, for the purpose of convenient and brief description, for a detailed working process of the foregoing system, apparatus, and unit, reference may be made to a corresponding process in the foregoing method embodiments, and details are not described herein.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing describes in detail a terminal, a service, and a user identification system and method provided in the present invention. Specific examples are used in this specification to describe the principle and implementation manners of the present invention. The foregoing embodiments are merely intended to help understand the method and idea of the present invention. In addition, with respect to the implementation manners and the application scope, modifications may be made by persons of ordinary skill in the art according to the idea of the present invention. Therefore, the specification shall not be construed as a limitation on the present invention.

## Claims

1. A terminal, applied to a digital trunked communications system, and comprising:
an access module, configured to access a wireless communications network; and
a sending module, configured to send a request message to a server after the access module accesses the wireless communications network, so that the server identifies whether the terminal meets an authorization condition, wherein the request message carries attribute information of the terminal.

2. The terminal according to claim 1, wherein that the request message carries attribute information of the terminal comprises:
the request message carries at least one of hardware attribute information or software attribute information of the terminal; wherein
the hardware attribute information comprises at least one of an international mobile subscriber identity IMSI, an international mobile equipment identity IMEI, or a hardware serial number; and the software attribute information comprises at least one of software identification information or software version information.

3. The terminal according to claim 1 or 2, wherein the terminal further comprises:
an obtaining module, configured to obtain a feedback message sent by the server, wherein the feedback message comprises a result of identifying the terminal by the server.

4. A server, comprising:
an obtaining module, configured to obtain a request message sent by a terminal, wherein the request message carries attribute information of the terminal;
an identification module, configured to identify, according to the attribute information of the terminal, whether the terminal meets an authorization condition; and
a remote control module, configured to remotely control the terminal when the identification module identifies that the terminal meets the authorization condition.

5. The server according to claim 4, wherein that the request message carries attribute information of the terminal comprises:
the request message carries at least one of hardware attribute information or software attribute information of the terminal; wherein
the hardware attribute information comprises at least one of an IMSI, an IMEI, or a hardware serial number; and the software attribute information comprises at least one of software identification information or software version information.

6. The server according to claim 4 or 5, wherein that the identification module is configured to identify, according to the attribute information of the terminal, whether the terminal meets the authorization condition comprises:
matching the received attribute information of the terminal with attribute information stored on the server, wherein the terminal meets the authorization condition when the matching is successful, or the terminal does not meet the authorization condition when the matching is unsuccessful, and that the terminal meets the authorization condition means that the terminal meets a condition for receiving remote control implemented by the server.

7. The server according to claim 4 or 5, wherein the server further comprises:
a sending module, configured to send a feedback message to the terminal, wherein the feedback message comprises a result of identifying the terminal by the server.

8. A user identification system, comprising:
a terminal and a server, wherein
the terminal is the terminal according to any one of claims 1 to 7; and
the server is the server according to any one of claims 1 to 7.

9. A user identification method, comprising:
accessing, by a terminal, a wireless communications network; and
sending, by the terminal, a request message to a server, so that the server identifies the terminal, wherein the request message carries attribute information of the terminal.

10. The method according to claim 9, wherein that the request message carries attribute information of the terminal comprises:
the request information carries at least one of hardware attribute information or software attribute information of the terminal; wherein
the hardware attribute information comprises at least one of an IMSI, an IMEI, or a hardware serial number; and the software attribute information comprises at least one of software identification information or software version information.

11. The method according to claim 9, wherein after the sending, by the terminal, a request message to a server, so that the server identifies the terminal, the method further comprises:
obtaining a feedback message sent by the server, wherein the feedback message comprises a result of identifying the terminal by the server.

12. A user identification method, comprising:
obtaining, by a server, a request message sent by a terminal, wherein the request message carries attribute information of the terminal;
identifying, by the server according to the attribute information of the terminal, whether the terminal meets an authorization condition; and
remotely controlling, by the server, the terminal when the terminal meets the authorization condition.

13. The method according to claim 12, wherein that the request message carries attribute information of the terminal comprises:
the request information carries at least one of hardware attribute information or software attribute information of the terminal; wherein
the hardware attribute information comprises at least one of an IMSI, an IMEI, or a hardware serial number; and the software attribute information comprises at least one of software identification information or software version information.

14. The method according to claim 12 or 13, wherein the identifying, by the server according to the attribute information of the terminal, whether the terminal meets an authorization condition comprises:
matching the received attribute information of the terminal with attribute information stored on the server, wherein the terminal meets the authorization condition when the matching is successful, or the terminal does not meet the authorization condition when the matching is unsuccessful, and that the terminal meets the authorization condition means that the terminal meets a condition for receiving remote control implemented by the server.

15. The method according to claim 12 or 13, wherein after the identifying, by the server according to the attribute information of the terminal, whether the terminal meets an authorization condition, the method further comprises:
sending a feedback message to the terminal, wherein the feedback message comprises a result of identifying the terminal by the server.
